# FASCICULE DE BREVET EUROPEEN

(11) **EP 2 534 542 B1**
(45) Date de publication et mention de la délivrance du brevet: **28.04.2021**
(21) Numéro de dépôt: 11702643.5
(22) Date de dépôt: 09.02.2011
(51) Int. Cl.: G05B 15/02, H04L 12/28, G06F 3/01

(54) **PROCEDE DE FONCTIONNEMENT D'UN DISPOSITIF DE COMMANDE D'EQUIPEMENTS DOMOTIQUES**
VERFAHREN FÜR DEN BETRIEB EINER STEUERVORRICHTUNG FÜR EIN DOMOTIKGERÄT
METHOD FOR OPERATING A CONTROL DEVICE FOR A HOME AUTOMATION APPARATUS

(30) Priorité: 09.02.2010 FR 1050901
(43) Date de publication de la demande: 19.12.2012
(73) Titulaire: SOMFY ACTIVITES SA, 74300 Cluses (FR)
(72) Inventeur: TO, Karina, Yuen Long N.t - Hong Kong Hong Kong (CN)
(74) Mandataire: Novaimo
(86) Numéro de dépôt international: PCT/EP2011/051854
(87) Numéro de publication internationale: WO 2011/098465

(56) Documents cités:
- WO-A1-2007/003185
- US-A1- 2005 097 478
- US-B1- 6 236 398
- US-B1- 6 243 707

## Description

L'invention concerne un dispositif de commande d'une installation domotique résidentielle ou commerciale.

Une telle installation comprend des équipements tels que des actionneurs électromécaniques pilotant notamment des écrans de protection solaire, ou des charges électriques. Pour la commande à distance de ces équipements, l'installation comprend au moins un point de commande qui permet d'envoyer des ordres de commande individuels ou par groupe aux différents équipements.

De plus en plus couramment, ces points de commande comprennent des interfaces évoluées, disposant notamment d'un écran et d'une pluralité de touches de commande. Les écrans peuvent être des écrans tactiles, permettant à l'utilisateur, comme sur un ordinateur, de sélectionner, valider, commander à partir d'une interface graphique riche et évoluant au fil des actions automatiques ou crées par un utilisateur.

En particulier, la demande JP08076978 décrit un contrôleur à écran tactile pouvant fonctionner selon plusieurs modes. Dans un mode opératoire, seules les touches disponibles relatives à ce mode sont affichées. L'interface présentée à l'utilisateur varie donc en fonction du mode opératoire courant.

Par ailleurs, il est connu de créer des groupes d'équipements ou des scénarios incluant certains équipements de l'installation. Ainsi, une seule action de commande permet d'agir sur une pluralité d'équipements simultanément. La configuration de ces groupes ou scénarios doit se faire au préalable de la commande. Des menus sur les interfaces graphiques simplifient ces configurations.

Le brevet EP 1 590 711 décrit des constitutions de groupes automatiques, selon un paramètre prédéfini, par exemple le type d'équipement, la longueur de course.

Le document WO 2007/003185 décrit un dispositif de commande d'un système domotique grâce auquel des commandes individuelles ou groupées peuvent être émises.

Le document US 6,243,707 décrit un système domotique dans lequel on peut commander différents équipements simultanément notamment pour mettre en œuvre un scénario.

Le document US 6,236,398 décrit un système de sélection de dispositifs domotiques. Le document US 2005/097478 A1 divulgue une interface de commande domotique pour l'affichage d'icônes permettant la commande des équipements domotiques individuellement ou collectivement.

L'invention se propose d'améliorer les procédés existants, en particulier dans le cas où l'interface de commande est une interface graphique évoluant suivant les actions de l'utilisateur. L'invention se propose également de simplifier les sélections et désélections des objets à commander, individuellement ou dans le cadre d'un ensemble.

Le but de l'invention est de fournir un procédé de configuration remédiant aux inconvénients ci-dessus et améliorant les procédés de configuration connus de l'art antérieur. En particulier, l'invention permet de mettre en œuvre un procédé de configuration simple, fiable, rapide et intuitif L'invention est telle que définie dans les revendications indépendantes.

Selon l'invention, le procédé régit le fonctionnement d'un dispositif de commande d'équipements domotiques d'un bâtiment. Le dispositif comprend un écran de visualisation, affecté à l'affichage, à un premier niveau, d'icônes d'équipements et, à un deuxième niveau, d'icônes de regroupement, un ensemble d'équipements domotiques étant associé à une icône de regroupement, et des moyens de sélection d'au moins une icône de regroupement et/ou d'au moins une icône d'équipement. Le procédé est caractérisé en ce qu'une action sur une touche de commande a pour effet une commande par défaut de l'ensemble des équipements associés à plusieurs icônes sélectionnées d'un même niveau tant qu'aucune icône d'un autre niveau n'est sélectionnée.

Selon l'invention, le procédé régit le fonctionnement d'un dispositif de commande d'équipements domotiques d'un bâtiment. Le dispositif comprend un écran de visualisation, affecté à l'affichage, à un premier niveau, d'icônes d'équipements et, à un deuxième niveau, d'icônes de regroupement, un ensemble d'équipements domotiques étant associé à une icône de regroupement, et des moyens de sélection d'au moins une icône de regroupement et/ou d'au moins une icône d'équipement. Le procédé est caractérisé en ce qu'une action sur une touche de commande a pour effet une commande par défaut de l'ensemble des équipements associés à au moins une icône de regroupement sélectionnée tant qu'aucune icône d'équipement de cet ensemble n'est sélectionnée.

L'action sur la touche de commande peut avoir pour effet une commande de l'ensemble des équipements associés à une icône de regroupement sélectionnée tant qu'une icône d'équipement de cet ensemble n'est pas également sélectionnée.

L'action sur la touche de commande peut avoir pour effet une commande de l'ensemble des équipements associés à plusieurs icônes de regroupement sélectionnées.

L'action sur la touche de commande peut avoir pour effet une commande de l'ensemble des équipements associés à plusieurs icônes d'équipement sélectionnées.

Le procédé de fonctionnement peut comprendre une étape d'affichage d'icônes au premier et au deuxième niveau simultanément.

Selon l'invention, la touche de commande est une touche virtuelle de commande.

La touche virtuelle de commande est une touche générique multi-applications lorsque l'ensemble d'équipements commandés comprend des équipements de types différents.

La touche virtuelle de commande est une touche dédiée au type d'équipement commandé lorsque tous les équipements de l'ensemble commandé sont de même type.

La touche virtuelle de commande est une touche dédiée au type d'équipement commandé lorsqu'un équipement individuel est sélectionné.

De préférence, aucune touche virtuelle de commande ne s'affiche lorsqu'aucune icône d'équipement ou de regroupement n'est sélectionnée.

Les icônes de regroupement peuvent être des icônes de localisation, regroupant des équipements en fonction de leur localisation à l'intérieur du bâtiment ou de ses abords ou des icônes de type, regroupant des équipements comprenant un même type d'actionneur et/ou un même type de produit associé.

Selon l'invention, le dispositif de commande d'équipements d'une installation domotique comprend une interface pour l'affichage et la saisie d'informations relatives à la commande des équipements de l'installation, l'interface comprenant un moyen d'affichage, à un premier niveau, d'icônes d'équipements et, à un deuxième niveau, d'icônes de regroupement, un ensemble d'équipements domotiques étant associé à une icône de regroupement, et des moyens de sélection d'au moins une icône de regroupement et/ou d'au moins une icône d'équipement. Le dispositif comprend des moyens de traitement des informations affichées et des informations saisies. Il comprend en outre des moyens de commande par défaut d'un groupe d'équipements liés selon un critère commun.

Les moyens de commande par défaut peuvent être remplacés par des moyens de commande individuelle lorsqu'un seul équipement est spécifié au niveau de l'interface.

Les moyens de commande peuvent être des moyens virtuels non associés à des touches physiques du dispositif.

Le dispositif peut comprendre un écran tactile pour l'affichage et la saisie d'informations et de commandes.

Le dispositif de commande comprend, selon l'invention, des moyens matériels et/ou logiciels de mise en œuvre du procédé de commande défini précédemment. Ces moyens peuvent comprendre des moyens logiciels.

L'invention concerne aussi un programme informatique comprenant un moyen de code de programme informatique adapté à la réalisation des étapes du procédé de commande défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :
La figure 1 représente une installation domotique comprenant plusieurs équipements de quatre types différents.
La figure 2 représente une schématisation du dispositif de commande selon l'invention.
Les figures 3 à 6 sont des représentations schématiques d'affichages sur un écran d'interface homme-machine du dispositif de commande montrant différentes étapes du procédé de fonctionnement selon l'invention.

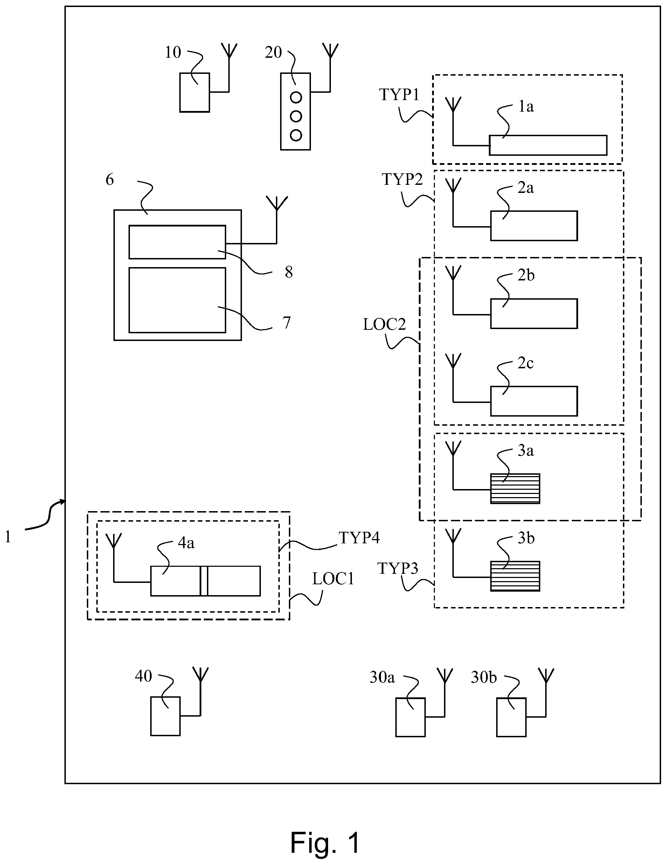

La figure 1 représente une installation domotique 1 comprenant plusieurs équipements de quatre types différents.

Les équipements comprennent des actionneurs et des produits domotiques sur lesquels les actionneurs agissent pour les déplacer ou pour les activer. Les actionneurs comprennent des moyens de réception d'ordres par voie hertzienne, représentés par une antenne. Alternativement, les ordres peuvent être transmis par d'autres moyens de communication filaires ou non-filaires, tels que courants porteurs ou liaisons de type infrarouge.

Un équipement d'un premier type TYP1 est par exemple un store motorisé 1a, commandé par un premier élément de commande 10. Des équipements d'un deuxième type TYP2 sont par exemple des volets roulants motorisés 2a, 2b, 2c, pouvant être commandés par l'intermédiaire d'un deuxième élément de commande 20. Des équipements d'un troisième type TYP3 sont par exemple des stores vénitiens motorisés 3a et 3b. Ils peuvent être commandés respectivement par des troisièmes moyens de commande 30a et 30b. Un équipement d'un quatrième type TYP4 est par exemple un portail motorisé 4a, piloté grâce à un quatrième élément de commande 40. Un encadrement en pointillé entoure les équipements de même type.

D'autres types d'équipements peuvent être présents dans une telle installation mais non représentés, incluant à titre d'exemples des actionneurs pour porte de garage, alarme, verrouillage, ventilation naturelle, éclairage, chauffage-climatisation etc.

L'installation 1 comprend également un dispositif de commande 6 ou contrôleur, prenant par exemple la forme d'un panneau de commande fixe, notamment mural. Le contrôleur comprend un écran de commande 7, préférentiellement de type tactile, et une unité électronique 8 permettant d'assurer la gestion du contrôleur, en particulier la gestion de l'écran. Le contrôleur comprend aussi d'autres moyens d'interface homme-machine tels que clavier de commande, voyants et des moyens de traitement pour la commande des équipements et la communication radio.

Sur la figure 1 sont également représentés des groupements d'équipements correspondant à leur localisation (localisation réelle ou telle qu'imaginée ou telle que voulue par l'utilisateur) à l'intérieur du bâtiment ou de ses abords.

Une première localisation LOC1 correspondant au jardin, intègre le portail motorisé 4a. Une deuxième localisation LOC2 regroupe deux des volets roulants motorisés 2b et 2c et un des stores vénitiens motorisés 3a, installés dans le séjour. D'autres regroupements ont été effectués par l'utilisateur, sans être reportés sur la figure 1 pour ne pas la surcharger. Par exemple, la localisation LOC3 correspond à une première chambre 1, alors que la localisation LOC4 correspond à une deuxième chambre.

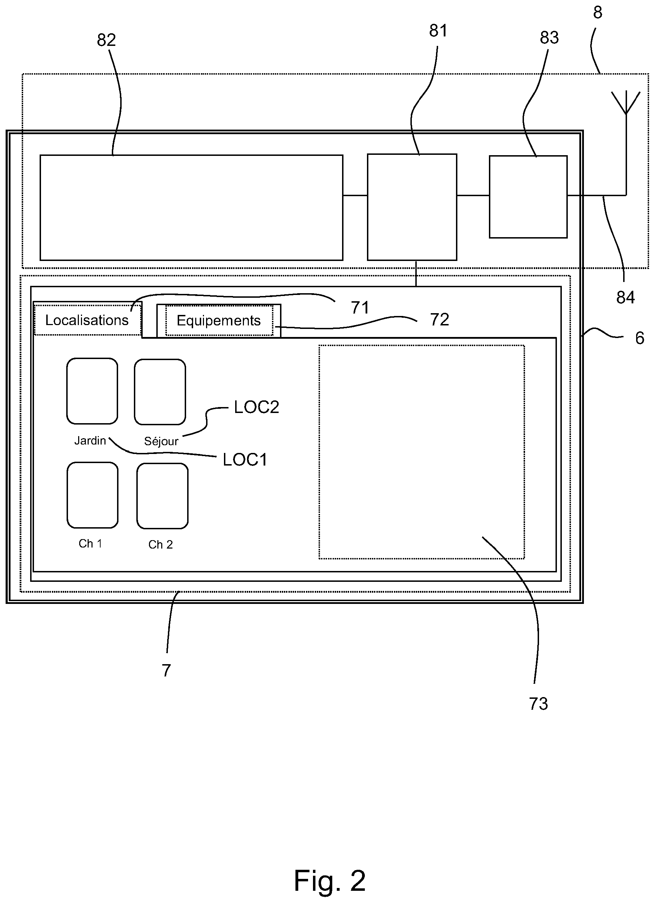

Le contrôleur 6 est détaillé à la figure 2. L'unité électronique 8 comprend un microcontrôleur 81 relié d'une part à une interface utilisateur 82 comprenant par exemple un clavier de commande, d'autre part à un émetteur-récepteur 83 d'ordres de commande sous forme d'ondes électromagnétiques comprenant une antenne associée 84. Le contrôleur permet notamment la commande des différents équipements du bâtiment, individuellement ou en groupe prédéfini.

Les équipements et le dispositif de commande communiquent entre eux par utilisation d'un même protocole radiofréquences. Un symbole d'antenne représente ce moyen de communication commun. Alternativement, plusieurs protocoles peuvent être utilisés, avec passerelles de communication ou avec dispositifs supportant plusieurs protocoles.

Pour communiquer avec les différents équipements électriques de la maison cités ci-dessus, le contrôleur est préalablement mis en relation ou apparié avec ces équipements, c'est-à-dire qu'un identifiant est échangé pour permettre de créer un lien de communication entre le contrôleur et les équipements et reconnaître à qui s'adressent les informations émises que celles-ci soient des ordres de commande ou tout autre type de message.

Les groupements par localisation ou par type sont représentés sur l'écran du dispositif de commande par des icônes dites de regroupement. Ainsi, on représente chaque localisation, c'est-à-dire un ensemble d'équipements se trouvant dans un même lieu, par une icône de localisation ILOCi. Un texte alphanumérique précise la signification de l'icône, par exemple « Séjour » pour la deuxième icône de localisation. Comme il sera vu plus loin, l'utilisateur est libre de choisir, dans une base d'icônes de localisation, celles de son choix, et de lui donner le nom de son choix. Il est également libre d'associer divers équipements à chaque localisation.

Une icône générique ou icône de type ITYPi, représente un ensemble d'équipements comprenant un même type d'actionneur et/ou un même type de produit associé. Elle est symbolisée de préférence par une représentation graphique schématique d'un type de produit pouvant être activé par l'actionneur. Par exemple, dans le cas d'un écran mobile pouvant être déplacé par l'actionneur, l'icône est une représentation graphique de l'écran dans une position intermédiaire entre deux positions extrêmes, notamment une position moyenne.

Ainsi, il existe une première icône de type ITYP1 pour représenter les groupements d'équipements du même type, comme décrits précédemment. De préférence, l'icône représente schématiquement le type d'équipement auquel elle correspond, par exemple un store de terrasse à demi-déployé pour le deuxième type.

De même, pour chaque équipement, une icône d'équipement est prévue telle qu'elle symbolise un équipement particulier du bâtiment à piloter. Pour simplifier les graphismes, les symboles liés aux différentes icônes ne sont pas représentés sur les figures.

De préférence, les icônes de regroupement (localisation et type) sont elles-mêmes séparées à l'écran sous deux onglets 71, 72. Les icônes de localisation sont regroupées sous un onglet « Localisations » 71 sur l'écran du contrôleur. Lorsque cet onglet est actif, les différentes icônes des localisations préenregistrées sont affichées. La figure 2 représente plus particulièrement cet onglet et l'affichage des icônes de localisation dans une zone d'information, dite de deuxième niveau.

Un deuxième onglet « Equipements » permet d'afficher les différentes icônes de type d'équipements disponibles dans l'installation. Toute autre représentation graphique que des onglets est évidemment possible, les différentes icônes de regroupement pouvant être affichées sur une même zone de l'écran.

Les icônes de regroupement et les icônes d'équipement correspondent à des niveaux d'affichages différents, en particulier dans la mesure où les équipements individuels peuvent être associés à des regroupements donnés.

Une portion d'écran 73, dite zone de commande, permet l'affichage de touches de commande, associées à l'objet ou aux objets sélectionnés. Cette zone de commande peut être vide lorsqu'aucune des icônes n'est sélectionnée. La sélection d'une icône peut se faire par action sur l'écran lorsque celui-ci est de type tactile, ou par l'utilisation d'un pointeur (souris, stylo,etc).

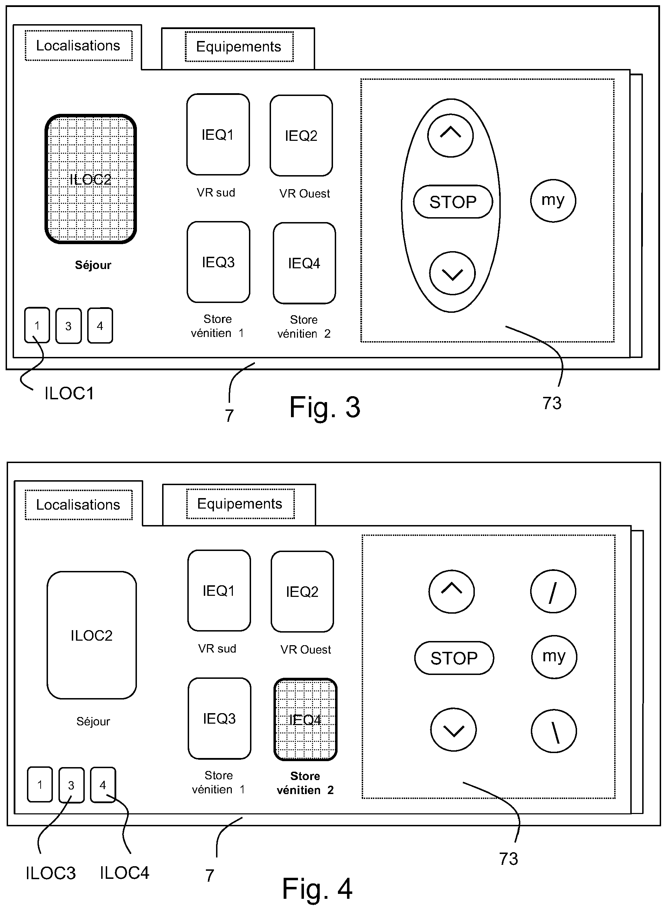

A l'intérieur de chaque onglet, lorsqu'une icône de regroupement est sélectionnée, les différentes icônes d'équipements correspondant à ce regroupement sont affichées, au niveau d'une zone d'information, dite de premier niveau. De préférence, l'icône de regroupement sélectionnée est également représentée. Cet affichage est représenté en figure 3, représentant l'écran et l'icône de localisation ILOC2 correspondant au séjour apparaît en gras, pour indiquer qu'elle est l'icône active. Les icônes d'équipements pourraient également être affichées dans une autre fenêtre d'affichage ou dans un autre onglet que celui du premier niveau d'information. L'affichage simultané, dans des zones distinctes de l'écran, des icônes de niveaux d'affichage différents permet cependant de connaître le contenu des regroupements.

De plus, lorsqu'un utilisateur sélectionne une icône de regroupement, des icônes de commande s'affichent dans la zone de commande. Celles-ci correspondent à des touches virtuelles, par exemple pour l'ouverture, la fermeture, l'arrêt, et la commande vers une valeur personnalisée. Selon l'invention, tant qu'aucune icône d'équipement n'est sélectionnée, ces icônes de commande s'adressent par défaut à l'ensemble des équipements appartenant au regroupement choisi.

Si le regroupement choisi est un regroupement par type d'équipement, les icônes de commande peuvent être adaptées à ce type d'équipement.

Si le regroupement est un regroupement par localisation, alors les touches virtuelles correspondent à une commande de base « multi-applications », dans la mesure où les types des équipements correspondant à la localisation sélectionnée peuvent être divers. Lorsque la commande d'ensemble doit s'adresser à des équipements de types différents, les touches virtuelles de commande par défaut pourraient également être limitées aux seules touches communes pour l'ensemble des équipements. Auquel cas, si les équipements à commander n'ont aucune touche de commande commune, aucune ne s'affiche et la fonction de commande de groupe n'est pas disponible. Alternativement, si les équipements associés à une localisation sont tous de même type, les touches virtuelles peuvent être dédiées à ce type d'équipement. Dans le cas où tous les équipements participant à un scénario font partie de l'ensemble des équipements représenté par l'icône de localisation, une icône de commande de ce scénario peut apparaître dans la zone de commande 73 et le scénario peut être joué suite à une action sur cette icône se trouvant dans la zone de commande. L'icône de commande de scénario s'ajoute à ou remplace la ou les touches de commande.

Dans la configuration représentée à la figure 3, l'affichage dans la zone de commande correspond donc à une commande d'un ensemble (celui-ci pouvant contenir des équipements assez disparates), l'ensemble étant défini par le groupe des équipements affectés à la localisation choisie. Chacun des différents équipements de l'ensemble a un lien établi par une configuration préalable avec la localisation. Si un utilisateur souhaite piloter individuellement un des équipements de cette localisation, il sélectionne l'icône correspondante, par exemple l'icône IEQ4 correspondant à un store vénitien à lames orientables. A cet instant, l'icône de regroupement ILOC2 et l'icône d'équipement IEQ4 sont toutes deux sélectionnées, même si elles correspondent à deux niveaux d'affichage différents. Alternativement, la sélection de l'une annule la sélection de l'autre.

L'icône d'équipement est maintenant représentée en gras sur la figure 4. La zone de commande comprend alors (dans cet exemple, venant s'ajouter aux icônes de commande vues précédemment), de nouvelles icônes permettant la commande dédiée de l'orientation des lames du store. Les icônes de commande restées identiques permettent toujours de commander l'ouverture, la fermeture, l'arrêt, et la commande vers une valeur personnalisée, mais elles s'adressent cette fois uniquement à l'équipement sélectionné et non plus à l'ensemble précédent.

Alternativement, les touches de commande font partie de l'interface utilisateur 82. Celle-ci peut intégrer un certain nombre de touches permettant la commande de l'ensemble des fonctions liées aux équipements de l'installation. Cependant, en fonction de la sélection d'une icône, les actions liées aux appuis sur les touches de commande varient. Par défaut, les touches de commande permettent la commande de l'ensemble des équipements associés à une icône de regroupement, tant qu'une icône d'équipement n'est pas sélectionnée. Au moment où une icône d'équipement est sélectionnée, le fonctionnement des touches de commande bascule et permet la commande individuelle de l'équipement sélectionné. La commande de groupe s'annule.

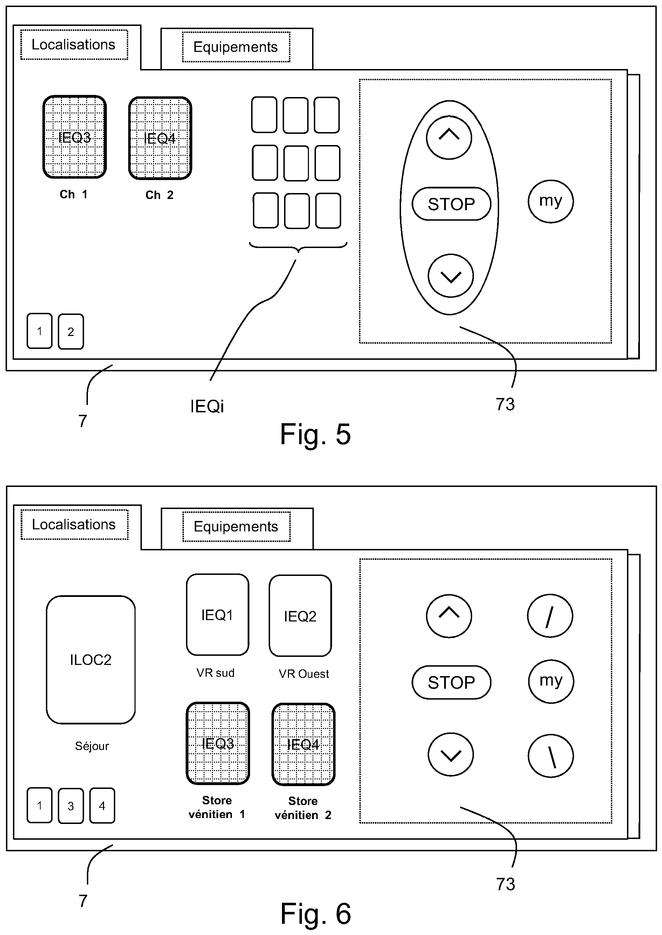

Selon un autre aspect de l'invention, représenté aux figures 5 et 6, il est possible de sélectionner plus d'une icône d'un même niveau, et ceci tant qu'une icône d'un autre niveau d'affichage n'est pas sélectionnée. En particulier, l'invention permet à un utilisateur de sélectionner plusieurs icônes d'équipements à l'intérieur d'un regroupement. Les touches de commande s'adressent alors aux équipements dont les icônes sont sélectionnées. Un sous-groupe est donc constitué de manière temporaire sans enregistrement préalable ou ultérieur. Ce sous-groupe disparaît au moment où au moins une icône d'un autre niveau est sélectionnée. Cette alternative permet de gérer facilement la désélection des icônes, en particulier, d'un niveau d'affichage à l'autre. Ainsi, plusieurs icônes d'un même niveau d'affichage peuvent être sélectionnées ensemble, mais la sélection d'une icône d'un autre niveau annule la sélection précédente. Préférentiellement, une nouvelle sélection d'une icône déjà sélectionnée annule sa sélection. Ces mesures permettent de simplifier la gestion des ensembles ou des équipements individuels à commander.

Un troisième niveau d'affichage peut correspondre aux différents onglets ou à tout type d'indexation équivalent. Ainsi, la sélection d'un onglet annule une sélection précédente d'une ou plusieurs icônes d'équipements ou de regroupement.

La commande de l'ensemble des équipements associés à une icône de localisation en tant que groupe ne va pas nécessairement de soi, en particulier lorsque les équipements sont de types différents. Elle représente cependant une amélioration dans la mesure où elle propose à l'utilisateur une fonction de commande supplémentaire. La réalisation des regroupements pourrait également être pensée dans cette optique de commande de groupe par défaut.

Un troisième onglet peut être affecté à la commande par scénario. Un scénario préenregistré et mis en route permet de positionner les différents équipements participants à ce scénario dans les positions ou les états préenregistrés. Ainsi, dans ce troisième onglet sont affichées des icônes de scénario, pour lesquels il n'est pas nécessaire d'afficher des touches de commande, dans la mesure où celles-ci sont inclues dans le scénario. Les scénarios peuvent également être associés à des localisations ou des types d'équipements.

Dans une variante de l'invention, des icônes de scénario associées à cette icône de regroupement pourraient remplacer les touches virtuelles de commande correspondant à l'icône de regroupement sélectionnée ou s'ajouter à celles-ci. La commande par défaut est donc une commande construite par l'utilisateur lorsqu'il définit un scénario. La commande s'applique donc aux équipements de l'ensemble associé à l'icône de regroupement sélectionnée et participants au scénario de commande sélectionné.

Alternativement, toutes les icônes de scénario (associées ou non à une icône de regroupement) sont affichées dans la zone de commande. Leur sélection permet de jouer le scénario préenregistré, mais de manière limitée : seuls les équipements participants au scénario et associés à l'icône de regroupement sélectionnée sont concernés par la commande. Un quatrième onglet peut correspondre à l'affichage de toutes les icônes d'équipement en dehors de leurs liens avec une icône de regroupement. Une zone de commande peut également permettre la commande par défaut de tous les équipements de l'onglet lorsqu'aucune icône d'équipement individuel n'est sélectionnée.

On peut également prévoir dans la description ci-dessus qu'une icône d'équipement soit associée à un groupe d'équipement prédéfini par configuration de l'installation. Le procédé de fonctionnement reste identique, la commande d'ensemble par défaut s'appliquant aux équipements individuels ou groupés.

## Revendications

1. Procédé de fonctionnement d'un dispositif de commande (6) d'équipements domotiques (1a, 2a, 2b, 2c, 3a, 3b, 4a, 5a) d'un bâtiment, le dispositif comprenant un écran de visualisation (7), affecté à l'affichage, à un premier niveau, d'icônes d'équipements et, à un deuxième niveau, d'icônes de regroupement (ILOC1, ILOC2), un ensemble d'équipements domotiques étant associé à une icône de regroupement, et des moyens de sélection d'au moins une icône de regroupement et/ou d'au moins une icône d'équipement, **caractérisé en ce qu'**une action sur une touche de commande a pour effet une commande par défaut de l'ensemble des équipements associés à plusieurs icônes sélectionnées d'un même niveau tant qu'aucune icône d'un autre niveau n'est sélectionnée, **en ce que** la touche de commande est une touche virtuelle et **en ce que** :
- la touche virtuelle de commande est une touche générique multi-applications lorsque l'ensemble d'équipements commandés comprend des équipements de types différents ; et
- la touche virtuelle de commande est une touche dédiée au type d'équipement commandé lorsque tous les équipements de l'ensemble commandé sont de même type ; et
- la touche virtuelle de commande est une touche dédiée au type d'équipement commandé lorsqu'un équipement individuel est sélectionné.

2. Procédé de fonctionnement d'un dispositif de commande (6) d'équipements domotiques (1a, 2a, 2b, 2c, 3a, 3b, 4a, 5a) d'un bâtiment, le dispositif comprenant un écran de visualisation (7), affecté à l'affichage, à un premier niveau, d'icônes d'équipements et, à un deuxième niveau, d'icônes de regroupement (ILOC1, ILOC2), un ensemble d'équipements domotiques étant associé à une icône de regroupement, et des moyens de sélection d'au moins une icône de regroupement et/ou d'au moins une icône d'équipement, **caractérisé en ce qu'**une action sur une touche de commande a pour effet une commande par défaut de l'ensemble des équipements associés à au moins une icône de regroupement du deuxième niveau sélectionnée tant qu'aucune icône d'équipement de cet ensemble n'est sélectionnée, **en ce que** la touche de commande est une touche virtuelle et **en ce que** :
- la touche virtuelle de commande est une touche générique multi-applications lorsque l'ensemble d'équipements commandés comprend des équipements de types différents ; et
- la touche virtuelle de commande est une touche dédiée au type d'équipement commandé lorsque tous les équipements de l'ensemble commandé sont de même type ; et
- la touche virtuelle de commande est une touche dédiée au type d'équipement commandé lorsqu'un équipement individuel est sélectionné.

3. Procédé de fonctionnement selon la revendication précédente, **caractérisé en ce que** l'action sur la touche de commande a pour effet une commande de l'ensemble des équipements associés à une icône de regroupement du deuxième niveau sélectionnée tant qu'une icône d'équipement du premier niveau de cet ensemble n'est pas également sélectionnée ou **en ce que** l'action sur la touche de commande a pour effet une commande de l'ensemble des équipements associés à plusieurs icônes d'équipement du premier niveau sélectionnées.

4. Procédé de fonctionnement selon l'une des revendications précédentes, **caractérisé en ce qu'**il comprend une étape d'affichage d'icônes au premier et au deuxième niveau simultanément.

5. Procédé de fonctionnement selon l'une des revendications précédentes, **caractérisé en ce qu'**aucune touche virtuelle de commande ne s'affiche lorsqu'aucune icône d'équipement ou de regroupement n'est sélectionnée.

6. Procédé de fonctionnement selon l'une des revendications précédentes, **caractérisé en ce que** les icônes de regroupement sont des icônes de localisation, regroupant des équipements en fonction de leur localisation à l'intérieur du bâtiment ou de ses abords ou des icônes de type, regroupant des équipements comprenant un même type d'actionneur et/ou un même type de produit associé.

7. Dispositif de commande d'équipements d'une installation domotique, comprenant une interface pour l'affichage et la saisie d'informations relatives à la commande des équipements de l'installation, l'interface comprenant un moyen d'affichage, à un premier niveau, d'icônes d'équipements et, à un deuxième niveau, d'icônes de regroupement (ILOC1, ILOC2), un ensemble d'équipements domotiques étant associé à une icône de regroupement, et des moyens de sélection d'au moins une icône de regroupement et/ou d'au moins une icône d'équipement, le dispositif de commande comprenant des moyens de traitement des informations affichées et des informations saisies, **caractérisé en ce qu'**il comprend des moyens matériels et/ou logiciels de mise en œuvre du procédé de fonctionnement défini selon l'une des revendications 1 à 6 et des moyens de commande par défaut d'un groupe d'équipements liés selon un critère commun.

8. Dispositif de commande selon la revendication précédente, caractérisé en que les moyens de commande par défaut sont remplacés par des moyens de commande individuelle lorsqu'un seul équipement est spécifié au niveau de l'interface.

9. Dispositif de commande selon la revendication 7 ou 8, caractérisé en que les moyens de commande sont des moyens virtuels non associés à des touches physiques du dispositif.

10. Dispositif de commande selon l'une des revendications 7 à 9, caractérisé en qu'il comprend un écran tactile pour l'affichage et la saisie d'informations et de commandes.

11. Programme informatique comprenant un moyen de code de programme informatique adapté à la réalisation des étapes du procédé de fonctionnement selon l'une des revendications 1 à 6, lorsque le programme est exécuté sur un ordinateur.

## Patentansprüche

1. Verfahren für den Betrieb einer Steuervorrichtung (6) für Domotikgeräte (1a, 2a, 2b, 2c, 3a, 3b, 4a, 5a) eines Gebäudes, wobei die Vorrichtung einen Bildschirm (7), der für das Anzeigen von Gerätesymbolen auf einer ersten Ebene und von Gruppierungssymbolen (ILOC1, ILOC2) auf einer zweiten Ebene bestimmt ist, wobei ein Satz von Domotikgeräten einem Gruppierungssymbol zugeordnet ist, und Mittel zur Auswahl mindestens eines Gruppierungssymbols und/oder mindestens eines Gerätesymbols umfasst, **dadurch gekennzeichnet, dass** ein Druck auf eine Steuertaste eine Standardsteuerung des Satzes von Geräten, die mehreren ausgewählten Symbolen einer selben Ebene zugeordnet sind, bewirkt, sofern kein Symbol einer anderen Ebene ausgewählt ist, dadurch, dass die Steuertaste eine virtuelle Taste ist und dadurch, dass:
- die virtuelle Steuertaste eine generische Mehrfachanwendungstaste ist, wenn der Satz von gesteuerten Geräten Geräte von verschiedenen Typen umfasst; und
- die virtuelle Steuertaste eine Taste für den gesteuerten Gerätetyp ist, wenn alle Geräte des gesteuerten Satzes vom selben Typ sind; und
- die virtuelle Steuertaste eine Taste für den gesteuerten Gerätetyp ist, wenn ein einzelnes Gerät ausgewählt ist.

2. Verfahren für den Betrieb einer Steuervorrichtung (6) für Domotikgeräte (1a, 2a, 2b, 2c, 3a, 3b, 4a, 5a) eines Gebäudes, wobei die Vorrichtung einen Bildschirm (7), der für das Anzeigen von Gerätesymbolen auf einer ersten Ebene und von Gruppierungssymbolen (ILOC1, ILOC2) auf einer zweiten Ebene bestimmt ist, wobei ein Satz von Domotikgeräten einem Gruppierungssymbol zugeordnet ist, und Mittel zur Auswahl mindestens eines Gruppierungssymbols und/oder mindestens eines Gerätesymbols umfasst, **dadurch gekennzeichnet, dass** ein Druck auf eine Steuertaste eine Standardsteuerung des Satzes von Geräten, die mindestens einem ausgewählten Gruppierungssymbol der zweiten Ebene zugeordnet sind, bewirkt, sofern kein Gerätesymbol dieses Satzes ausgewählt ist, dadurch, dass die Steuertaste eine virtuelle Taste ist und dadurch, dass:
- die virtuelle Steuertaste eine generische Mehrfachanwendungstaste ist, wenn der Satz von gesteuerten Geräten Geräte von verschiedenen Typen umfasst; und
- die virtuelle Steuertaste eine Taste für den gesteuerten Gerätetyp ist, wenn alle Geräte des gesteuerten Satzes vom selben Typ sind; und
- die virtuelle Steuertaste eine Taste für den gesteuerten Gerätetyp ist, wenn ein einzelnes Gerät ausgewählt ist.

3. Verfahren für den Betrieb nach dem vorhergehenden Anspruch, **dadurch gekennzeichnet, dass** der Druck auf die Steuertaste eine Steuerung des Satzes von Geräten, die einem ausgewählten Gruppierungssymbol der zweiten Ebene zugeordnet sind, bewirkt, sofern ein Gerätesymbol der ersten Ebene dieses Satzes nicht auch ausgewählt ist, oder dadurch, dass der Druck auf die Steuertaste eine Steuerung des Satzes von Geräten, die mehreren ausgewählten Gerätesymbolen der ersten Ebene zugeordnet sind, bewirkt.

4. Verfahren für den Betrieb nach einem der vorhergehenden Ansprüche, **dadurch gekennzeichnet, dass** es einen Schritt zur Anzeige von Symbolen auf der ersten und auf der zweiten Ebene gleichzeitig umfasst.

5. Verfahren für den Betrieb nach einem der vorhergehenden Ansprüche, **dadurch gekennzeichnet, dass** keine virtuelle Steuertaste angezeigt wird, wenn kein Gerätesymbol oder Gruppierungssymbol ausgewählt ist.

6. Verfahren für den Betrieb nach einem der vorhergehenden Ansprüche, **dadurch gekennzeichnet, dass** die Gruppierungssymbole Standortsymbole, die Geräte in Abhängigkeit ihres Standorts im Inneren des Gebäudes oder ihrer Umgebung gruppieren, oder Typsymbole, die Geräte gruppieren, die einen Aktuator desselben Typs und/oder ein zugeordnetes Produkt desselben Typs umfassen, sind.

7. Vorrichtung zur Steuerung von Geräten einer Domotikanlage, die eine Schnittstelle für die Anzeige und die Erfassung von Informationen umfasst, die die Steuerung der Geräte der Anlage betreffen, wobei die Schnittstelle ein Mittel zur Anzeige von Gerätesymbolen auf einer ersten Ebene und von Gruppierungssymbolen (ILOC1, ILOC2) auf einer zweiten Ebene, wobei ein Satz von Domotikgeräten einem Gruppierungssymbol zugeordnet ist, und Mittel zur Auswahl mindestens eines Gruppierungssymbols und/oder mindestens eines Gerätesymbols umfasst, wobei die Steuervorrichtung Mittel zur Verarbeitung der angezeigten Informationen und erfassten Informationen umfasst, **dadurch gekennzeichnet, dass** sie materielle und/oder Softwaremittel zur Durchführung des Verfahrens für den Betrieb nach einem der Ansprüche 1 bis 6 und Standardsteuermittel einer Gruppe von Geräten umfasst, die gemäß einem gemeinsamen Kriterium im Zusammenhang stehen.

8. Steuervorrichtung nach dem vorhergehenden Anspruch, **dadurch gekennzeichnet, dass** die Standardsteuermittel durch Mittel zur individuellen Steuerung ersetzt werden, wenn ein einziges Gerät an der Schnittstelle spezifiziert ist.

9. Steuervorrichtung nach Anspruch 7 oder 8, **dadurch gekennzeichnet, dass** die Steuermittel virtuelle Mittel sind, die nicht physischen Tasten der Vorrichtung zugeordnet sind.

10. Steuervorrichtung nach einem der Ansprüche 7 bis 9, **dadurch gekennzeichnet, dass** sie einen Touchscreen für die Anzeige und die Erfassung von Informationen und Befehlen umfasst.

11. Computerprogramm, das ein Computerprogrammcodemittel umfasst, das für die Ausführung der Schritte des Betriebsverfahrens nach einem der Ansprüche 1 bis 6 ausgelegt ist, wenn das Programm auf einem Computer ausgeführt wird.

## Claims

1. A method of operation of a control device (6) for automation systems equipment (1a, 2a, 2b, 2c, 3a, 3b, 4a, 5a) of a building, the device comprising a display screen (7), assigned to the display, at a first level, of equipment icons and, at a second level, of grouping icons (ILOC1, ILOC2), a group of automation systems equipment being associated with a grouping icon, and means of selection of at least one grouping icon and/or of at least one equipment icon, **characterized in that** an action on a control key has the standard effect of controlling all of the equipment associated with several icons selected of the same level as long as no icon of another level is selected, **in that** the control key is a virtual key and **in that**:
- the virtual control key is a generic multi-applications key when all the equipment being controlled comprises items of equipment of different types; and,
- the virtual control key is a key dedicated to the type of equipment being controlled when all the equipment of the group being controlled are of the same type; and,
- the virtual control key is a key dedicated to the type of equipment being controlled when an individual piece of equipment is selected.

2. A method of operation of a control device (6) for automation systems equipment (1a, 2a, 2b, 2c, 3a, 3b, 4a, 5a) of a building, the device comprising a display screen (7), assigned to the display, at a first level, of equipment icons and, at a second level, of grouping icons (ILOC1, ILOC2), a group of automation systems equipment being associated with a grouping icon, and means of selection of at least one grouping icon and/or of at least one equipment icon, **characterized in that** an action on a control key has the standard effect of controlling all of the equipment associated with at least one grouping icon of the second level selected as long as no equipment icon of this group is selected, **in that** the control key is a virtual key and **in that**:
- the virtual control key is a generic multi-applications key when all the equipment being controlled comprises items of equipment of different types; and,
- the virtual control key is a key dedicated to the type of equipment being controlled when all the equipment of the group being controlled are of the same type; and,
- the virtual control key is a key dedicated to the type of equipment being controlled when an individual piece of equipment is selected.

3. The method of operation as claimed in the preceding claim, **characterized in that** the action on the control key has the effect of controlling all of the equipment associated with a selected grouping icon of the second level as long as no equipment icon of the first level of this group is also selected or **in that** the action on the control key has the effect of controlling all of the equipment associated with several selected equipment icons of the first level.

4. The method of operation as claimed in one of the preceding claims, **characterized in that** it comprises a step for displaying icons at the first and at the second level simultaneously.

5. The method of operation as claimed in one of the preceding claims, **characterized in that** no virtual control key is displayed when no equipment or grouping icon is selected.

6. The method of operation as claimed in one of the preceding claims, **characterized in that** the grouping icons are localization icons, grouping equipment according to their localization inside the building or its surroundings or type icons, grouping equipment comprising the same type of actuator and/or the same type of associated product.

7. A control device for equipment of an automation system installation, comprising an interface for the display and the input of information relating to the control of the equipment of the installation, the interface comprising a means of display, at a first level, of equipment icons and, at a second level, of grouping icons (ILOC1, ILOC2), a group of automation systems equipment being associated with a grouping icon, and means of selection of at least one grouping icon and/or of at least one equipment icon, the control device comprising means for processing information displayed and information input, **characterized in that** it comprises hardware and/or software means for implementing the steps of the method of operation according to one of Claims 1 to 6, and standard means for controlling a group of equipment linked according to a common criterion.

8. The control device as claimed in the preceding claim, **characterized in that** the standard control means are replaced by individual control means when a single piece of equipment is specified at the level of the interface.

9. The control device as claimed in either of claims 7 or 8, **characterized in that** the control means are virtual means not associated with physical keys of the device.

10. The control device as claimed in one of claims 7 to 9, **characterized in that** it comprises a touch screen for the display and the input of information and controls.

11. A computer program comprising a means for coding a computer program designed for the implementation of the steps of the method of operation as claimed in one of claims 1 to 6, when the program is executed on a computer.
